# EUROPEAN PATENT SPECIFICATION

(11) **EP 3 256 904 B1**
(45) Date of publication and mention of the grant of the patent: **06.05.2020**
(21) Application number: 16749832.8
(22) Date of filing: 10.02.2016
(51) Int. Cl.: G02F 1/167, G02F 1/19

(54) **MULTI-ELECTRODE TOTAL INTERNAL REFLECTION IMAGE DISPLAY**
BILDANZEIGEVORRICHTUNG MIT MEHREREN ELEKTRODEN FÜR INNERE TOTALREFLEXION
AFFICHAGE D'IMAGE À RÉFLEXION INTERNE TOTALE À MULTIPLES ÉLECTRODES

(30) Priority: 12.02.2015 US 201562115361 P
(43) Date of publication of application: 20.12.2017
(73) Proprietor: Clearink Displays, Inc., Santa Clara, CA 95054 (US); Merck Patent GmbH, 64293 Darmstadt (DE)
(72) Inventor: GOULDING, Mark, Ringwood Hampshire BH24 1SH (GB); SMITH, Nathan, Southampton SO15 2TD (GB); HANNEBAUER, Rob, Vancouver, British Columbia V6S 1A9 (CA)
(74) Representative: Browne, Robin Forsythe
(86) International application number: PCT/US2016/017416
(87) International publication number: WO 2016/130720

(56) References cited:
- WO-A1-2008/103554
- WO-A1-2012/021121
- WO-A2-2015/005899
- US-A1- 2003 214 697
- US-A1- 2008 002 247
- US-A1- 2013 278 995
- US-B1- 6 215 920
- US-B2- 7 164 536
- US-B2- 7 439 948

## Description

This application claims the filing date benefit of United States Provisional Application No. 62/115,361, filed on February 12, 2015.

### Field

The instant disclosure is directed to a method and apparatus for total internal reflection-based image displays. Specifically, an embodiment of the disclosure relates to reflective image displays capable of displaying images composed of at least three different color states with a multi-electrode design.

### BACKGROUND

Light modulation in conventional single particle total internal reflection (TIR) image displays are controlled by movement of a plurality of light absorbing electrophoretically mobile particles into and out of the evanescent wave region at the surface of the front sheet comprising of convex protrusions under an applied voltage across the electrophoretic medium. The particles may have either a positive or negative charge with a single optical characteristic. A first optical state of the display may be formed when the particles are attracted to the evanescent wave region where incident light rays are absorbed by the mobile particles (referred to as the dark state). A second optical state may be displayed when the particles are moved out of the evanescent wave region towards a rear electrode where light rays may be totally internally reflected to form a light or bright state.

This application describes a two-particle TIR image display comprising a plurality of particles of opposite charge polarity and different optical characteristics capable of forming at least three different optical states. TIR may be frustrated to create light absorbing or dark states by application of a voltage bias and moving either the plurality of positively or plurality of negatively charged particles into the evanescent wave region. A third optical state may be formed by moving both pluralities of particles out of the evanescent wave region. This disclosure further describes multi-electrode display architectures. The combination of particles of opposite charge polarity and different optical characteristics in combination with multi-electrode display architectures leads to TIR image displays capable of displaying images with multiple colors that is described herein.

US 2008/002247 discloses a display unit includes a prism layer comprising a light receiving surface, first facets extending along and facing with the light receiving surface, and second facets intersecting with the first facets, the first facets receiving incident light via the light receiving surface and reflecting them in a direction different from the light, and the second facets receiving light reflected by the first facets; first color layers placed on the second facets; a medium layer including a first medium that has a first refractive index causing total reflection of the light at a border between the first medium and the first facets, and a second medium that has a second refractive index enabling to pass through the light at a border between the second medium and the first facets, and the first and second media being movable in the medium layer; and a contact device configured to selectively bringing the first medium or the second medium into contact with the first facet.

WO 2015/005899 discloses TIR-modulated wide viewing angle displays.

WO 2008/103554 discloses a diffraction grating for which the intensity and/or direction of the diffracted light is electronically modulated using the electrophoresis of an index-modifying species.

WO 2012/021121 discloses displays comprising a number of display cells. Each of the display cells includes a first electrode, which is transparent and disposed over a front surface of a display cell. A second electrode is disposed opposite the first electrode. A dielectric layer is disposed between the first electrode and the second electrode, and is patterned to create a plurality of recessed volumes. A fluid is disposed in a volume defined by the first electrode, the dielectric layer, and the recessed volumes. The fluid comprises a dye of a different color from an adjacent display cell. Charged particles are disposed within the fluid. The display also includes a display driver configured to pack the charged particles against the front of the display cell to create a first optical state, to pack the charged particles against the back of the display cell to create a second optical state, or to pack the particles into the recessed regions to create a third optical state.

According to a first aspect of the invention there is provided a method to display an image as presented in claim 1.

According to a second aspect of the invention there is provided a multi-electrode display device as presented in claim 6.

Optional features are presented in the dependent claims.

### BRIEF DESCRIPTION OF DRAWINGS

These and other embodiments of the disclosure will be discussed with reference to the following exemplary and non-limiting illustrations, in which like elements are numbered similarly, and where:
Fig. 1A schematically illustrates a cross-section of a portion of a total internal reflection image display comprising oppositely charged particles and three electrodes in a first optical state according to one embodiment of the disclosure;
Fig. 1B schematically illustrates a cross-section of a portion of a total internal reflection image display comprising oppositely charged particles and three electrodes in a second optical state according to one embodiment of the disclosure;
Fig. 1C schematically illustrates a cross-section of a portion of a total internal reflection image display comprising oppositely charged particles and three electrodes in a third optical state according to one embodiment of the disclosure;
Fig. 2A schematically illustrates a cross-section of a portion of a total internal reflection image display comprising oppositely charged particles and interdigitated rear electrodes in a first optical state according to one embodiment of the disclosure;
Fig. 2B schematically illustrates a cross-section of a portion of a total internal reflection image display comprising oppositely charged particles and interdigitated rear electrodes in a second optical state according to one embodiment of the disclosure;
Fig. 2C schematically illustrates a cross-section of a portion of a total internal reflection image display comprising oppositely charged particles and interdigitated rear electrodes in a third optical state according to one embodiment of the disclosure;
Fig. 3A schematically illustrates a cross-section of a portion of a total internal reflection image display comprising oppositely charged particles, interdigitated rear electrodes and a reflective layer in a first optical state according to one embodiment of the disclosure;
Fig. 3B schematically illustrates a cross-section of a portion of a total internal reflection image display comprising oppositely charged particles, interdigitated rear electrodes and a reflective layer in a second optical state according to one embodiment of the disclosure;
Fig. 3C schematically illustrates a cross-section of a portion of a total internal reflection image display comprising oppositely charged particles, interdigitated rear electrodes and a reflective layer in a third optical state according to one embodiment of the disclosure; and
Fig. 4 schematically illustrates an exemplary system for implementing an embodiment of the disclosure.

### DETAILED DESCRIPTION

The exemplary embodiments provided herein describes total internal reflection-based image displays capable of displaying at least three different colors. In an exemplary embodiment, the disclosure provides a total internal reflection-based image display comprising a first and second plurality of electrophoretically mobile particles of different charge polarity and color and three electrodes that may be independently controlled. When the first plurality of particles may be moved into the evanescent wave region a first color may be exhibited. When the second plurality of particles may be moved into the evanescent wave region a second color may be exhibited. When both the first and second plurality of particles are moved out of the evanescent wave region, a third color may be exhibited.

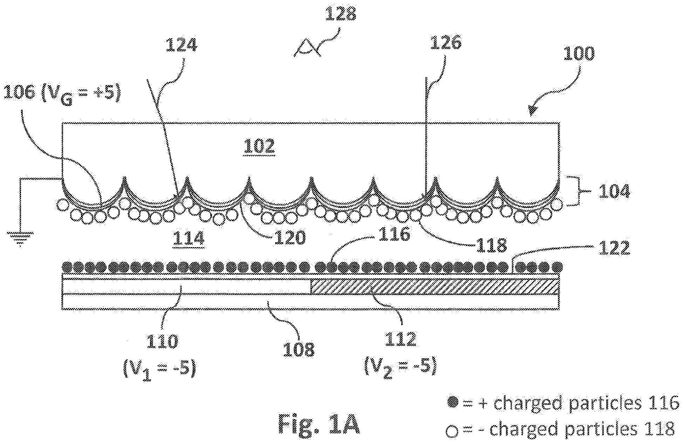

Fig. 1A schematically illustrates a cross-section of a portion of a total internal reflection image display comprising oppositely charged particles and three electrodes in a first optical state according to one embodiment of the disclosure. Display 100 in Fig. 1A comprises a transparent front sheet 102 containing a plurality of partially embedded high refractive index transparent hemispherical beads 104 in the inward surface, a grounded transparent front electrode layer 106 on the surface of the hemispherical beads and a rear support 108. Rear support 108 may be further equipped with two rear electrodes 110 and 112 such as in a thin film transistor or patterned electrode array and a voltage source (not shown) that connects the front and rear electrodes.

Alternatively, transparent front sheet 102 may define a continuous, high refractive index transparent sheet with convex protrusions. The convex protrusions may be in the shape of hemispherical protrusions as illustrated in Fig. 1A. Front sheet 102 may comprise a polymer such as polycarbonate. Front electrode 106 may comprise a transparent conductive material such as indium tin oxide (ITO), Baytron™, conductive nanoparticles, metal nanowires, graphene or other conductive carbon allotropes or a combination of these materials dispersed in a substantially transparent polymer.

Rear electrode 110, 112 may comprise a conductive material such as indium tin oxide (ITO), conductive particles, metal nanowires, Baytron™, graphene or other conductive carbon allotropes or a combination thereof dispersed in a polymer or a metallic-based conductive material (*e*.*g*., aluminum, gold or silver). Rear electrodes 110, 112 may comprise one or more of a thin film transistor (TFT) array, direct drive patterned array of electrodes or a passive matrix array of electrodes.

Contained within the cavity formed by the front electrode 106 and rear electrodes 110, 112 may be an inert, low refractive index air or fluid medium 114. Medium 114 may be a hydrocarbon. In an exemplary embodiment, medium 114 may be a fluorinated hydrocarbon or a perfluorinated hydrocarbon. In an exemplary embodiment, medium 322 may be Fluorinert™ perfluorinated hydrocarbon liquid available from 3M, St. Paul, MN.

Medium 114 may further include a plurality of suspended light absorbing electrophoretically mobile particles 116, 118. In an exemplary embodiment, medium 114 has a lower refractive index than front sheet 102. The cavity formed between front electrode 106 and rear electrodes 110, 112 may further comprise spacer units (not shown) such as beads to control the size of the gap between the front and rear electrodes. The spacer units may comprise glass, metal or an organic polymer.

Mobile particles 116 comprise a first charge polarity and first optical characteristic (*i.e.* color). Mobile particles 118 comprise a second charge of opposite polarity and a second optical characteristic. Particles 116 or 118 may be any color of the visible spectrum or a combination of colors to give a specific shade or hue. Particles 116, 118 may be formed of an organic material or an inorganic material or a combination of an organic and inorganic material. Particles 116, 118 may be a dye or a pigment or a combination thereof. Particles 116, 118 may be at least one of carbon black, a metal or metal oxide. The particles may have a polymer coating. In one embodiment, particles 116 illustrated in display 100 in Fig. 1A may consist of a positive charge polarity while particles 118 consist of a negative charge polarity.

The exemplary embodiment of display 100 further includes an optional dielectric layer 120 located on the surface of transparent front electrode 106 and disposed between transparent front electrode 106 and medium 114. Fig. 1A illustrates a dielectric layer 122 on the surface of the rear electrodes 110, 112 in display 100 such that dielectric layer 122 is disposed between the rear electrodes 110, 112 and medium 114. Having a dielectric layer on the rear electrode may be optional and may depend on the composition of the rear electrode. The dielectric layers may be used to protect one or both of the front electrode layer 106 and rear electrode layers 110, 112. The dielectric layers may be substantially uniform, continuous and defect-free layer of at least about 20 nanometers in thickness. Dielectric compounds may be organic or inorganic in type. The most common inorganic dielectric material is silicon dioxide commonly used in integrated chips. Organic dielectric materials are typically polymers such as polyimides, fluoropolymers, polynorbomenes and hydrocarbon-based polymers lacking polar groups. In an exemplary embodiment, the dielectric layers comprises parylene. In another embodiment the dielectric layers comprises a halogenated parylene. Other inorganic or organic dielectric materials or combinations thereof may also be used for the dielectric layers.

The dielectric layers may each have a thickness of at least 80 nanometers. In an exemplary embodiment, the thickness is about 80-200 nanometers. Advantageously, parylene has a low dielectric constant and may be made as thin as 20 nanometers without having pinhole leakage paths. Such features contribute to display structures having a comparatively high capacitance per unit area. The high capacitance means that the required number per unit area of charged mobile particles may be attracted to the parylene at a lower voltage than if the thickness was higher or if the dielectric constant was lower.

Referring again to Fig. 1A, display 100 illustrates a pixel of the display in a first optical state. The optical state may be created by absorption of incident light rays by negatively charged particles 118 of a first optical characteristic. In this state, the electrophoretically mobile positively charged particles 116 may be moved under the influence of an applied voltage bias towards rear electrode surfaces 110. 112. In the example in Fig. 1A, rear electrodes 110, 112 have an applied voltage bias V₁ and V₂, respectively, of-5V (It should be noted that other voltage biases of varying magnitudes may be applied as -5V is used for illustrative purposes only). The negatively charged particles 118 may be moved near the front dielectric layer adjacent the grounded front electrode surface 106 that has a +5V bias (V_{G} into the evanescent wave region such that TIR is frustrated and incident light rays are absorbed. This is illustrated by incident light rays 124 and 126 that may be absorbed by the negatively charged particles 118 whereby the portion of the display in Fig. 1A observed by viewer 128 exhibits the optical characteristic (*i*.*e*. color) of the negatively charged particles 118.

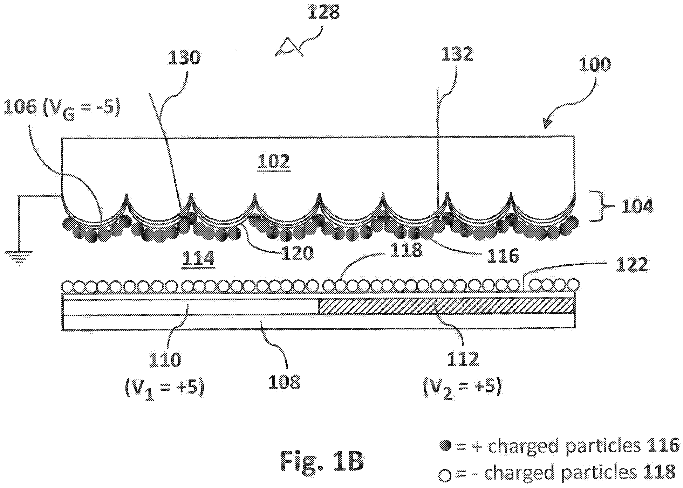

Fig. 1B schematically illustrates a cross-section of a portion of a total internal reflection image display comprising oppositely charged particles and three electrodes in a second optical state according to one embodiment of the disclosure. Display 100 in Fig. 1B is the same as that described in Fig. 1A in the preceding paragraphs but illustrates how a second optical state may be formed. Display 100 in Fig. 1B illustrates a pixel of the display in a second optical state created by absorption of incident light rays by positively charged particles 116 having a second optical characteristic. In this state, electrophoretically mobile particles 118 with a negative charge polarity may be moved under the influence of an applied voltage bias near dielectric layer 120 adjacent to rear electrode surfaces 110, 112. In this example in Fig. 1B, the rear electrodes 110, 112 have an applied voltage bias V₁ and V₂, respectively, of +5V (It should be noted that other voltage biases of varying magnitudes may be applied as +5V is used for illustrative purposes only). Particles 116 of a positive charge polarity are moved near the front dielectric layer adjacent the grounded front electrode surface 106 that has a -5V bias (V_{G}) and into the evanescent wave region. When the particles enter the evanescent wave region and frustrate TIR, the incident light rays may be absorbed. This is illustrated by incident light rays 130 and 132 that may be absorbed by the positively charged particles 116. Thus the portion of the display in Fig. 1B observed by viewer 128 may exhibit the optical characteristic (i.e. color) of the positively charged particles 116.

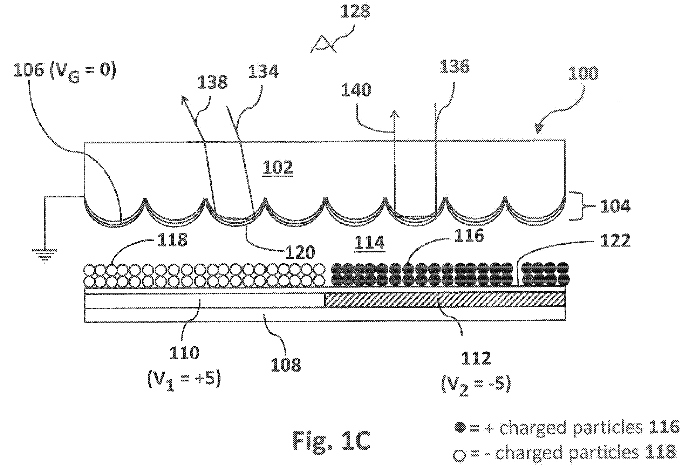

Fig. 1C schematically illustrates a cross-section of a portion of a total internal reflection image display comprising oppositely charged particles and three electrodes in a third optical state according to one embodiment of the disclosure. Display 100 in Fig. 1C is the same as that described in Figs. 1A-B in the preceding paragraphs but illustrates how a third optical state may be formed. In this state, mobile particles 116 with a positive charge polarity may be moved under the influence of an applied voltage bias, V₂, of-5V towards rear electrode 112. The mobile particles 118 with a negative charge polarity may be moved under the influence of an applied voltage bias, V₁, of +5V towards rear electrode 110. In this state of the display in Fig. 1C, there may be no particles in the evanescent wave region near grounded front electrode 106 which has a voltage bias. V_{G}, of 0V. Incident light rays 134 and 136 may be instead totally internally reflected back towards viewer 128 as reflected light rays 138 and 140, respectively, to create a light or bright state. This forms a third optical state of the display.

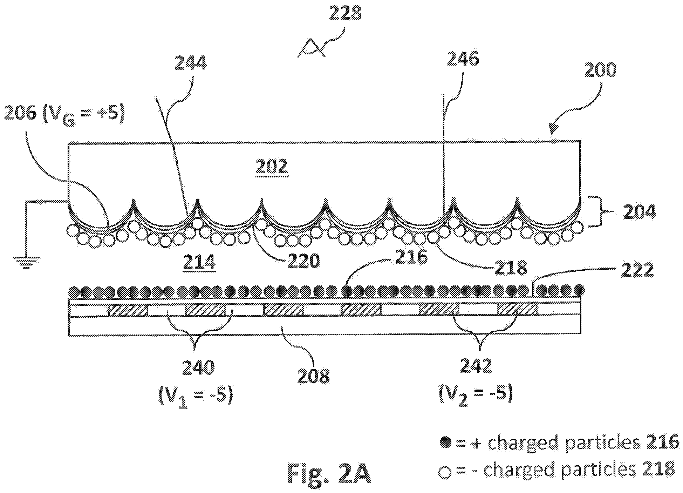

Fig. 2A schematically illustrates a cross-section of a portion of a total internal reflection image display comprising oppositely charged particles and interdigitated rear electrodes in a first optical state according to one embodiment of the disclosure. Display 200 in Fig. 2A is similar to display 100 in Figs. 1A-C explained in preceding paragraphs but with some differences in the design of the rear electrodes. Display 100 has a first and second electrode in each pixel. Display 200 in Fig. 2A is of a pixel with an array of more than two interdigitated electrodes 240,242. In an exemplary embodiment, electrodes 240, 242 may be arrayed in an alternating fashion. In Figs. 2A-C rear electrode 242 is highlighted by cross hatches to distinguish from adjacent electrodes 240. In other embodiments electrodes 240, 242 may be arranged in any periodic manner. Electrodes 240, 242 may be further supported by a rear support 208. A first plurality of electrodes 240 may be controlled by a first transistor and a second plurality of electrodes 242 may be controlled by a second transistor. Each plurality of electrodes 240 or 242 may consist of at least two electrodes. Ideally the width of electrodes 240, 242 would decrease as the number of electrodes increases per each pixel while keeping the dimensions of the pixel constant.

Multiple electrodes within each pixel may provide an additional advantageous feature of the display design in Fig. 2A. Multiple electrodes may lead to decreased lateral electric fields within the cavity containing medium 214 and mobile particles 216, 218. Reducing the lateral electric fields may reduce lateral movement and migration of the particles. This may lead to a more uniform display performance. The cavity formed between the front dielectric layer 206 and rear dielectric layer 222 and rear electrodes 240, 242 in Fig. 2A may further comprise spacer units (not shown) such as beads to control the size of the gap between the front and rear electrodes.

The exemplary embodiment of display 200 may further include an optional dielectric layer 220 located on the surface of transparent front electrode 206 and disposed between transparent front electrode 206 and medium 214. Front electrode 206 is located on the inward side of transparent front sheet 202 where the plurality of protrusions 204 exists. Fig.2A illustrates a dielectric layer 222 on the surface of the rear electrodes 240, 242 in display 200 such that the dielectric layer is disposed between the rear electrodes 240, 242 and medium 214. Having a dielectric layer on the rear electrodes may also be optional and may depend on the composition of the rear electrodes. The dielectric layers may each be a uniform layer of at least about 20 nanometers in thickness. Dielectric compounds may be organic or inorganic in type. The most common inorganic dielectric material is silicon dioxide commonly used in integrated chips. Organic dielectric materials are typically polymers such as polyimides, fluoropolymers, polynorbomenes and hydrocarbon-based polymers lacking polar groups. In an exemplary embodiment, the dielectric layers comprise parylene. In another embodiment the dielectric layer comprises halogenated parylene. Other inorganic or organic dielectric materials or combinations thereof may also be used.

The dielectric layer may have a thickness of at least 80 nanometers. In an exemplary embodiment, the thickness is about 80-200 nanometers. Advantageously, parylene has a low dielectric constant and may be made as thin as 20 nanometers without having pinhole leakage paths. Such features contribute to display structures having a comparatively high capacitance per unit area. The high capacitance means that the required number per unit area of charged mobile particles may be attracted to the parylene at a lower voltage than if the thickness was higher or if the dielectric constant was lower.

Referring again to Fig. 2A, display 200 illustrates a pixel of the display in a first optical state. The optical state may be created by absorption of incident light rays by the particles 218 with a negative charge polarity and a first optical characteristic. In this state, the electrophoretically mobile particles 216 with a positive charge polarity may be moved under the influence of an applied voltage bias near the plurality of rear electrodes 240, 242. The plurality of electrodes 240 and 242 may be interdigitated but it is not required for operation of display 200. In the example in Fig. 2A, the rear electrodes 240, 242 may have an applied voltage bias V₁ and V₂, respectively, of -5V (It should be noted that other voltage biases of varying magnitudes may be applied as -5V is used for illustrative purposes only). The negatively charged particles 218 may be moved near the front electrode surface 206 that has a +5V bias (V_{G}) into the evanescent wave region such that TIR is frustrated and incident light rays may be absorbed. This is illustrated by incident light rays 244 and 246 that are absorbed by the negatively charged particles 218. Thus the portion of the display in Fig. 2A observed by viewer 228 exhibits the optical characteristic (*i.e.* color) of the particles 218 with a negative charge polarity.

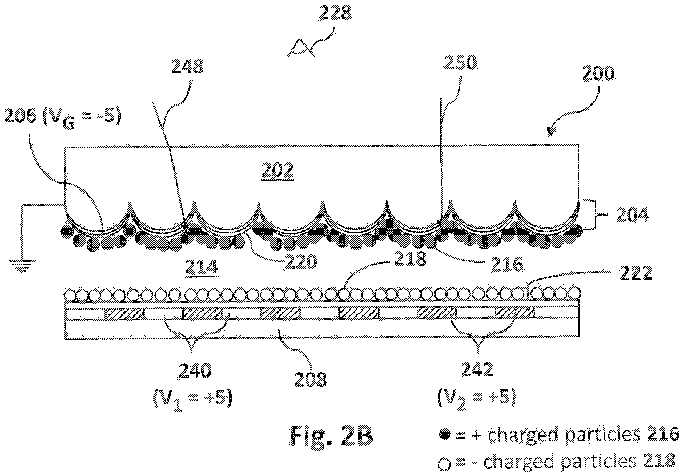

Fig. 2B schematically illustrates a cross-section of a portion of a total internal reflection image display comprising oppositely charged particles and interdigitated rear electrodes in a second optical state according to one embodiment of the disclosure. Display 200 in Fig. 2B is the same as that described in Fig. 2A in the preceding paragraphs but illustrates a second optical state. Display 200 in Fig. 2B illustrates a pixel of the display in a second optical state created by absorption of incident light rays by particles 216 with a positive charge polarity and a second optical characteristic. In this state, the electrophoretically mobile particles 218 with a negative charge polarity have been moved under the influence of an applied voltage bias towards rear electrodes 240, 242. In the example in Fig. 2B, rear electrodes 240, 242 have an applied voltage bias V₁ and V₂, respectively, of +5V (It should be noted that other voltage biases of varying magnitudes may be applied as +5V is used for illustrative purposes only). The positively charged particles 216 may be moved near the evanescent wave region adjacent the grounded front electrode surface 206 that has a -5V bias (V_{G}). In this position, particles 216 may frustrate TIR and absorb incident light rays. This is illustrated by incident light rays 248 and 250 in Fig. 2B that are absorbed by the positively charged particles 216. Thus the portion of the display in Fig. 2B observed by viewer 228 exhibits the optical characteristic (*i*.*e*. color) of the particles 216 with a positive charge polarity.

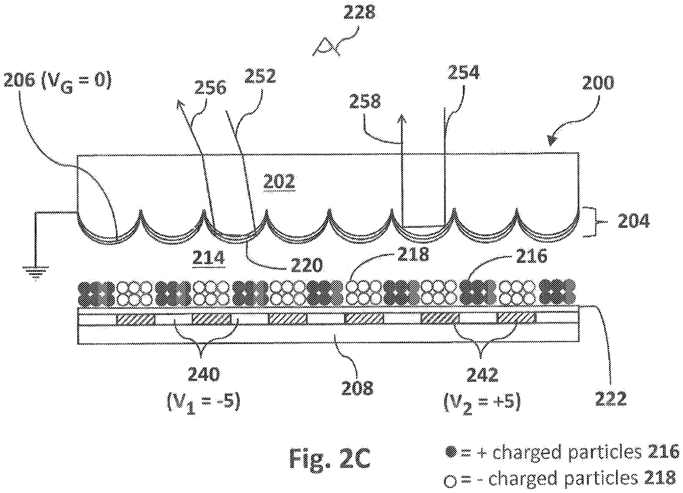

Fig. 2C schematically illustrates a cross-section of a portion of a total internal reflection image display comprising oppositely charged particles and interdigitated rear electrodes in a third optical state according to one embodiment of the disclosure. Display 200 in Fig. 2C is the same as that described in Figs. 2A-B in the preceding paragraphs but exhibits a third optical state. In this state, the mobile positively charged particles 216 may be moved under the influence of an applied voltage bias, V₁. of -5V near rear electrode 240. The mobile negatively charged particles 218 have be moved under the influence of an applied voltage bias, V₂, of +5V near rear electrode 242. In this state of the display in Fig. 2C there may be no particles in the evanescent wave region near the grounded front electrode 206 which has a voltage bias, V_{G,} of 0V. Incident light rays 252 and 254 may instead be totally internally reflected back towards viewer 228 as reflected light rays 256 and 258, respectively, to create a light or bright state. This is a third optical state of the display.

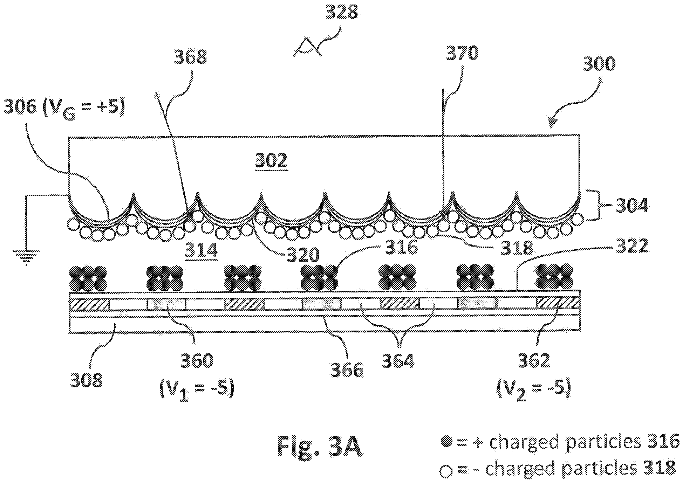

Fig. 3A schematically illustrates a cross-section of a portion of a total internal reflection image display comprising oppositely charged particles, interdigitated rear electrodes and a reflective layer in a first optical state according to one embodiment of the disclosure. Display 300 in Fig. 3A is similar to displays 100 and 200 explained in preceding paragraphs but with differences in the design of the rear electrodes. Display 1 00 has a first and second electrode in each pixel. Display 200 contains a plurality of more than two electrodes each of 240 and 242 in a single pixel in an array. Display 300 may also consist of a plurality of at least two electrodes. 360 and 362, that may be supported by a rear support layer 308. Electrodes 360 are shaded and electrodes 362 are highlighted by crosshatched lines in Figs. 3A-C. Further, a transparent region 364 may be located between electrodes 360 and 362 that allows light rays to pass through. In an exemplary embodiment, region 364 may be glass, plastic or other substantially transparent material. In other embodiments, region 364 may instead be devoid of any material. Region 364 may also be made of a highly reflective filler material. Display 300 may further comprise a light reflective layer 366. Reflective layer 366 may be situated between the rear support layer 308 and the layer containing the plurality of electrodes 360, 362 and transparent region 364. A first plurality of electrodes 360 may be controlled by a first transistor and a second plurality of electrodes 362 may be controlled by a second transistor. Each plurality of electrodes, 360 or 362, may consist of more than two electrodes and may be interdigitated. The width of electrodes 360, 362 may decrease as the number of electrodes increases per each pixel while keeping the dimensions of the pixel constant.

Multiple electrodes within each pixel may provide an additional advantageous feature of the display design in Fig. 3A. Multiple electrodes may lead to decreased lateral electric fields within the cavity containing medium 314 and mobile particles 316, 318. Reducing the lateral electric fields may reduce lateral movement and migration of the particles. This may lead to more uniform display performance. The cavity formed between reflective front electrode 306 and rear electrodes 360, 362 and transparent region 364 may further comprise spacer units (not shown) such as beads to control the size of the gap between the from and rear electrodes.

The space or region 364 between rear electrodes 360 and 362 and the reflective layer 366 provides an additional advantageous feature of the display design illustrated in Fig. 3A. Conventional TIR image displays with front sheets comprising convex protrusions such as hemispherical protrusions, suffer from a "dark pupil" problem. The reflectance of the display may be reduced as incident light rays may pass through the dark pupil region at the center of each protrusion instead of being totally internally reflected. In the invention described herein, light rays that may pass through the dark pupil regions may be reflected by reflective layer 166. Reflected light rays may then be reflected back towards viewer 328 which may enhance the reflectance of display 300. Regions 364 between the rear electrodes 360 and 362 may further be aligned or registered with the convex protrusions. For example, region 364 may align with a single hemispherical protrusion or row of hemispherical protrusions.

The exemplary embodiment of display 300 may further include an optional dielectric layer 320 located on the surface of transparent front electrode 306 and disposed between transparent front electrode 306 and medium 314. Fig. 3A illustrates a dielectric layer 322 on the surface of the rear electrodes 360, 362. Dielectric layer 322 may also be located on transparent region 364 in display 300 such that the dielectric layer is disposed between the rear electrodes 360, 362 and transparent region 364 and medium 314. Having a dielectric layer on the rear electrodes may be optional and may depend on the composition of the rear electrodes. The dielectric layers may each be a uniform layer of at least about 20 nanometers in thickness. Dielectric compounds may be organic or inorganic in type. The most common inorganic dielectric material is silicon dioxide commonly used in integrated chips. Organic dielectric materials are typically polymers such as polyimides, fluoropolymers, polynorbomenes and hydrocarbon-based polymers lacking polar groups. In an exemplary embodiment, the dielectric layers comprises parylene. In another embodiment the dielectric layers comprise a halogenated parylene. Other inorganic or organic dielectric materials or combinations thereof may also be used.

The dielectric layers may each have a thickness of at least 80 nanometers. In an exemplary embodiment, the thickness is about 80-200 nanometers. Advantageously, parylene has a low dielectric constant and may be made as thin as 20 nanometers without having pinhole leakage paths. Such features may contribute to display structures having a comparatively high capacitance per unit area. The high capacitance means that the required number per unit area of charged mobile particles may be attracted to the parylene at a lower voltage than if the thickness was higher or if the dielectric constant was lower.

Referring again to Fig. 3A, the display 300 shows a pixel of the display in a first optical state. The optical state may be created by absorption of light rays by the particles 318 with a negative charge polarity and with a first optical characteristic. In this state, the electrophoretically mobile particles 316 with a positive charge polarity may be moved under the influence of an applied voltage bias near dielectric layer 322 adjacent to the plurality of rear electrodes 360, 362. Ideally, the plurality of electrodes 360 and 362 may be interdigitated but is not required for operation of display 300. In this example in Fig. 3A, the rear electrodes 360, 362 may have an applied voltage bias V₁ and V₂, respectively, of-5V (It should be noted that other voltage biases of varying magnitudes may be applied as -5V is used for illustrative purposes only). The negatively charged particles 318 may be moved near the front dielectric layer adjacent the grounded front electrode surface 306 that has a +5V bias (V_{G}). Front electrode 306 is located on the inward surface of transparent front sheet 302 on the surface of the plurality of protrusions 304. In this location particles 318 may enter the evanescent wave region, absorb incident light rays and frustrate TIR. This is illustrated by incident light rays 368 and 370 in Fig. 3A that may be absorbed by negatively charged particles 318 whereby the portion of the display in Fig. 3A observed by viewer 328 may exhibit the optical characteristic (*i.e.* color) of the negatively charged particles 318.

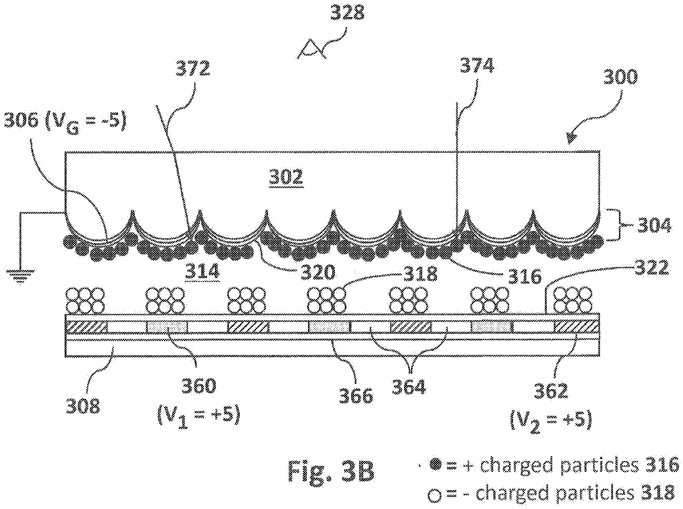

Fig. 3B schematically illustrates a cross-section of a portion of a total internal reflection image display comprising oppositely charged particles, interdigitated rear electrodes and a reflective layer in a second optical state according to one embodiment of the disclosure. Display 300 in Fig. 3B is the same as that described in Fig. 3A in the preceding paragraphs but illustrates how a second optical state may be formed. Display 300 in Fig. 3B shows a pixel of the display in a second optical state created by absorption of incident light rays by particles 316 with a positive charge polarity and with a second optical characteristic. In this state, the electrophoretically mobile particles 318 of a negative charge polarity may be moved under the influence of an applied voltage bias near optional dielectric layer 322 adjacent to the plurality of rear electrode surfaces 360 and 362. In the example in Fig. 3B, rear electrodes 360, 362 may have an applied voltage bias V₁ and V₂, respectively, of +5V (It should be noted that other voltage biases of varying magnitudes may be applied as +5V is used for illustrative purposes only). The particles 116 with a positive charge polarity may be moved near the front dielectric layer adjacent the grounded front electrode surface 106 that has a -5V bias (V_{G}) into the evanescent wave region such that TIR is frustrated and incident light rays may be absorbed. This is illustrated by incident light rays 372 and 374 that may be absorbed by the positively charged particles 316. Thus the portion of the display in Fig. 3B observed by viewer 328 exhibits the optical characteristic (*i.e.* color) of the positively charged particles 316.

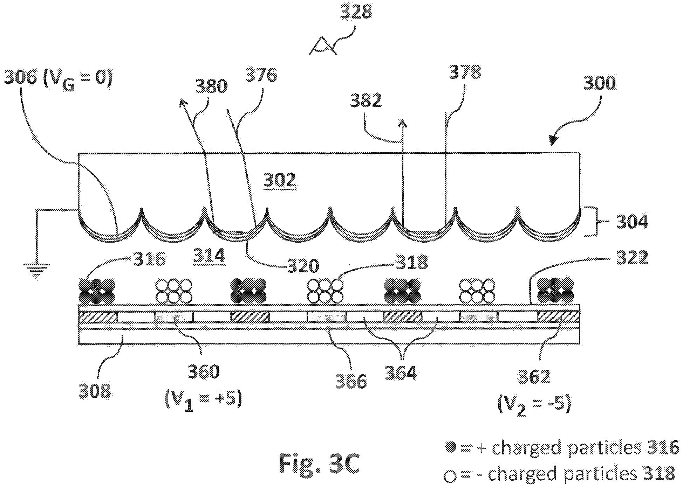

Fig. 3C schematically illustrates a cross-section of a portion of a total internal reflection image display comprising oppositely charged particles, interdigitated rear electrodes and a reflective layer in a third optical state according to one embodiment of the disclosure. Display 300 in Fig. 3C is the same as that described in Figs. 3A-B in the preceding paragraphs but exhibits a third optical state. In this state, the mobile particles 316 with a positive charge polarity may be moved under the influence of an applied voltage bias, V₂, of -5V near rear electrode 362. The mobile particles 318 with a negative charge polarity may be moved under the influence of an applied voltage bias, V₁, of+5V near dielectric layer 322 adjacent to rear electrode 360 (rear electrodes arc shaded in Fig. 3C). In this state of the display in Fig. 3C there may be no particles in the evanescent wave region near the front dielectric layer 320 adjacent the grounded front electrode 306 which has a voltage bias, V_{G}, of 0V. Incident light rays 376 and 378 may instead be totally internally reflected back towards viewer 328 as reflected light rays 380 and 382, respectively, to create a light or bright state. This is a third optical state of display 300. In this third optical state, regions 364 and reflective layer 366 may further enhance the reflectance as there are no particles in the evanescent wave region to absorb incident light rays. In this state, light rays that are not totally internally reflected may pass through the center of the protrusions of front sheet 302 and may be reflected by layer 366 back towards viewer 328.

In displays 100, 200 and 300 illustrated in Figs. 1A-C, 2A-C and 3A-C and described in the preceding paragraphs, three optical states of each the displays have been described. It should be noted that a continuum of intermediate grey states may also be capable of being displayed by the reflective image displays described herein. For example, by varying the magnitude of the applied voltage bias and the time period the voltage bias is applied only partial frustration of TIR may be carried out by a portion of the particles.

In some embodiments, a porous reflective layer may be used in combination with the reflective image displays comprising more than two electrodes described herein. The porous reflective layer may be interposed between the front and rear electrode layers. In other embodiments the rear electrode may be located on the surface of the porous electrode layer. The porous reflective layer may be formed of a track etched polymeric material such as polycarbonate, polyester, polyimide or some other polymeric material or glass with a thickness of at least about 10 microns. The porous nature of the film would allow for the electrophoretically mobile particles to pass through the pores. The average diameter of the pores in the porous reflective layer may be substantially greater (*e.g*., about 10 times greater) than the average diameter of the mobile particles. The pores in the porous reflective layer may constitute a large fraction (*e*.*g*., at least 10%) of the total surface area of the porous reflective layer to permit substantially unimpeded passage of the mobile particles through the pores.

Various control mechanisms for the invention may be implemented fully or partially in software and/or firmware. This software and/or firmware may take the form of instructions contained in or on a non-transitory computer-readable storage medium. Those instructions may then be read and executed by one or more processors to enable performance of the operations described herein. The instructions may be in any suitable form, such as but not limited to source code, compiled code, interpreted code, executable code, static code, dynamic code, and the like. Such a computer-readable medium may include any tangible non-transitory medium for storing information in a form readable by one or more computers, such as but not limited to read only memory (ROM); random access memory (RAM); magnetic disk storage media; optical storage media; a flash memory, etc.

In some embodiments, a tangible machine-readable non-transitory storage medium that contains instructions may be used in combination with the reflective displays comprising more than two electrodes described herein. In other embodiments the tangible machine-readable non-transitory storage medium may be further used in combination with one or more processors.

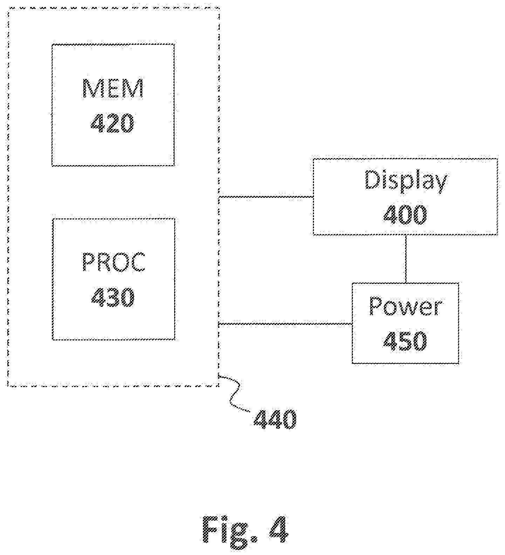

Fig. 4 shows an exemplary system for controlling a display according to one embodiment of the disclosure. In Fig. 4, display 400 is controlled by controller 440 having processor 430 and memory 420. Other control mechanisms and/or devices may be included in controller 440 without departing from the disclosed principles. Controller 440 may define hardware, software or a combination of hardware and software. For example, controller 440 may define a processor programmed with instructions (*e*.*g*., firmware). Processor 430 may be an actual processor or a virtual processor. Similarly, memory 420 may be an actual memory (*i.e*., hardware) or virtual memory (*i*.*e*., software).

Memory 420 may store instructions to be executed by processor 430 for driving display 400. the instructions may be configured to operate display 400. In one embodiment, the instructions may include biasing electrodes associated with display 400 (not shown) through power supply 450. When biased, the electrodes may cause movement of electrophoretic particles towards or away from a region proximal to the surface of the plurality of protrusions at the inward surface of the front transparent sheet to thereby absorb or reflect light received at the inward surface of the front transparent sheet. By appropriately biasing the electrodes, mobile light absorbing particles (*e*.*g*., particles 116 and 118 in Figs. 1A-C, particles 216 and 218 in Figs. 2A-C, particles 316 and 318 in Figs. 3A-C) may be moved near the surface of the plurality of protrusions at the inward surface of the front transparent sheet into the evanescent wave region in order to substantially or selectively absorb the incoming light. Absorbing the incoming light creates a dark or colored state. By appropriately biasing the electrodes, mobile light absorbing particles (*e*.*g*., particles 116 and 118 in Figs. 1A-C, particles 216 and 218 in Figs. 2A-C, particles 316 and 318 in Figs. 3A-C) may be moved away from the surface of the plurality of protrusions at the inward surface of the from transparent sheet and out of the evanescent wave region in order to reflect the incoming light. Reflecting the incoming light creates a light state.

In other embodiments, the reflective image displays comprising more than two electrodes described herein may further include at least one sidewall (may also be referred to as cross-walls). Sidewalls limit particle settling, drift and diffusion to improve display performance and bistability. Sidewalls may be located within the light modulation layer. Sidewalls may completely or partially extend from the front electrode, rear electrode or both the front and rear electrodes. Sidewalls may comprise plastic or glass. Sidewalls may create wells or compartments (not shown) to confine the electrophoretically mobile particles. The sidewalls or cross-walls may be configured to create wells or compartments in, for example, square-like, triangular, pentagonal or hexagonal shapes or a combination thereof. The walls may comprise a polymeric material and patterned by conventional techniques including photolithography, embossing or molding. The walls help to confine the mobile particles to prevent settling and migration of said particles that may lead to poor display performance over time. In certain embodiments the displays may comprise cross-walls that completely bridge the gap created by the front and rear electrodes in the region where the liquid medium and the mobile particles resides. In certain embodiments, the reflective image display described herein may comprise partial cross-walls that only partially bridge the gap created by the front and rear electrodes in the region where the liquid medium and the mobile particles reside. In certain embodiments, the reflective image displays described herein may further comprise a combination of cross-walls and partial cross-walls that may completely and partially bridge the gap created by the front and rear electrodes in the region where the liquid medium and the mobile particles reside.

The reflective image displays comprising more than two electrodes described herein may further comprise a color filter array layer. The color filter array layer may comprise at least one or more of red, green and blue or cyan, magenta and yellow filters.

The reflective image displays comprising more than two electrodes described herein may further comprise a directional front light system. The directional front light system may include a light source, light guide and an array of light extractor elements on the top surface of the top sheet in each display. The directional light system may be positioned between the outward surface of the outward sheet and the viewer. The front light source may define a light emitting diode (LED), cold cathode fluorescent lamp (CCFL) or a surface mount technology (SMT) incandescent lamp. The light guide may be configured to direct light to the front entire surface of the transparent outer sheet while the light extractor elements direct the light in a perpendicular direction within a narrow angle, for example, centered about a 30° cone, towards the front sheet. A directional front light system may be used in combination with cross-walls or a color filter layer in the display architectures described herein or a combination thereof.

In other embodiments, any of the reflective image displays comprising more than two electrodes described herein may further include at least one edge seal. An edge seal may be a thermally or photo-chemically cured material. The edge seal may comprise one or more of an epoxy, silicone or other polymer based material.

In other embodiments, any of the reflective image displays comprising more than two electrodes described herein may further include a light diffusive layer to "soften" the reflected light observed by the viewer. In other embodiments a light diffusive layer may be used in combination with a front light

In the display embodiments described herein, they may be used in such applications such as in, but not limited to, electronic book readers, portable computers, tablet computers. cellular telephones, smart cards, signs, watches, wearables, shelf labels, flash drives and outdoor billboards or outdoor signs comprising a display.

The following exemplary and non-limiting embodiments provide various implementations of the disclosure. Example 1 is directed to a method, wherein a method to display an image, comprising: receiving one or more incoming light rays at a first surface of a transparent front sheet, the front sheet having a refractive index; forming a first optical state by directing a plurality of first electrophoretically mobile particles to a region adjacent the first electrode and directing a plurality of second electrophoretically mobile particles to a region adjacent a second and a third electrodes; forming a second optical state by directing the plurality of second electrophoretically mobile particles to the region adjacent the first electrode and directing the plurality of first electrophoretically mobile particles to the region adjacent the second and the third electrodes; and forming a third optical state by directing the plurality of first electrophoretically mobile particles to a region adjacent the second electrode and directing the second plurality of electrophoretically mobile particles to a region adjacent the third electrode.
Example 2 is directed to the method of example 1. wherein the first optical state further comprises substantially or selectively absorbing the one or more incoming light rays by the plurality of first electrophoretically mobile particles thereby exhibiting the optical characteristic of the first electrophoretically mobile particles.
Example 3 is directed to the method of examples 1 or 2, wherein the second optical state further comprises substantially or selectively absorbing the one or more incoming light rays by the plurality of second electrophoretically mobile particles thereby exhibiting the optical characteristic of the second electrophoretically mobile particles.
Example 4 is directed to the method of any preceding example, further comprising receiving the one or more light rays at the first surface of the transparent front sheet and exiting the one or more light rays at a second surface of the transparent front sheet, the second surface having a plurality of hemispherical or convex protrusions.
Example 5 is directed to the method of any preceding example, further comprising receiving the one or more light rays at the first surface of the transparent front sheet and exiting the one or more light rays at a second surface of the transparent front sheet, the second surface having a plurality of hemispherical or convex protrusions.
Example 6 is directed to the method of any preceding example, further comprising biasing the first electrode at a first voltage and biasing each of the second and third electrodes at a second voltage.
Example 7 is directed to the method of any preceding example, further comprising biasing the first electrode at a first voltage, biasing the second electrode at a second voltage and biasing the third electrode at a third voltage.
Example 8 is directed to the method of any preceding example, further comprising providing the second and the third biases substantially opposite in polarity.
1006.31 Example 9 is directed a multi-electrode display device, comprising: a transparent front sheet to receive one or more incoming light rays at a first surface thereof, the front sheet having a refractive index; a first electrode positioned proximal to the front sheet; a rear support facing the first electrode and forming a cavity therebetween; a second electrode positioned adjacent to the cavity; a third electrode positioned adjacent to second electrode and the cavity; and a controller to communicate with each of the first, second and the third electrodes, the controller configured to independently activate one or more of the first, second or third electrodes to cause total internal reflection of the one or more incoming light rays through the front sheet to thereby substantially exclude the incoming light rays from the cavity or to cause frustration of total internal reflection.
Example 10 is directed to the display of example 9, wherein the second and third electrodes are positioned adjacent each other.
Example 11 is directed to the display of examples 9 or 10, wherein the second and third electrodes are positioned as an array of interdigitated electrodes.
Example 12 is directed to the display of any preceding example, wherein at least one of the plurality of protrusions defines a hemispherical or a convex protrusion.
Example 13 is directed to the display of any preceding example, further comprising at least one of a first plurality of electrophoretically mobile particles and a second plurality of electrophoretically mobile particles, the first electrophoretically mobile particles having a first charge and the second electrophoretically mobile particles having a second charge.
Example 14 is directed to the display of any preceding example, wherein the first charge and the second charge are opposite in polarity.
Example 15 is directed to the display of any preceding example, wherein the controller is further configured to bias each of the first, second and third electrodes independently to modulate total internal reflection (TIR) by moving the first electrophoretically mobile particles adjacent to the first electrode and moving the second electrophoretically mobile particles adjacent to the second and third electrodes.
Example 16 is directed to the display of any preceding example, wherein the controller is further configured to bias each of the first, second and third electrodes independently to provide total internal reflection (TIR) by moving the first electrophoretically mobile particles adjacent the second electrode and moving the second electrophoretically mobile particles adjacent the third electrode.
Example 17 is directed to the display of any preceding example, wherein the front sheet further comprises a plurality of protrusions on a second surface thereof.
Example 18 is directed to the display of any preceding example, further comprising a dielectric layer formed over at least one of the first, second or third electrodes.
Example 19 is directed to the display of any preceding example, comprising: a transparent front sheet to receive one or more incoming light rays at a first surface and exiting the one or more light rays at a second surface thereof; a pixel having: a first electrode positioned at or near the second surface of the front sheet; a second electrode and a third electrode arranged to form a cavity with the first electrode, the first and the second electrodes arranged; and a controller to communicate with each of the first, second and the third electrodes, the controller configured to independently activate one or more of the first, second or third electrodes to cause a total internal reflection of the one or more incoming light rays through the front sheet to thereby substantially exclude the incoming light rays from the cavity or to cause frustration of total internal reflection.
Example 20 is directed to the display of any preceding example, further comprising a fluidic medium disposed in the cavity.
Example 21 is directed to the display of any preceding example, further comprising at least one of a first electrophoretically mobile particles and a second electrophoretically mobile particles disposed in the medium, the first electrophoretically mobile particles having a first charge polarity and the second electrophoretically mobile particles having a second charge polarity.
Example 22 is directed to the display of any preceding example, wherein the controller is configured to engage one or more of the first, second or third electrodes to draw the first electrophoretically mobile particles to the first electrode to cause frustration of total internal reflection of the one or more incoming light rays through the front sheet and to move the second electrophoretically mobile particles adjacent to the second and third electrodes.
Example 23 is directed to the display of any preceding example, wherein the second electrode and the third electrode are arranged to form an array.
Example 24 is directed to the display of any preceding example, further comprising a plurality of second and third electrodes arranged in a checkered pattern to form a pixel with the first electrode.
Example 25 is directed to the display of any preceding example, further comprising a dielectric layer to cover one of the first, second or third electrodes.
Example 26 is directed to the display of any preceding example, wherein the controller is configured to engage the second electrode and third electrode with substantially opposite biases.
Example 27 is directed to the display of any preceding example, wherein the controller is configured to engage the first electrode and second electrode with substantially opposite biases.

## Claims

1. A method to display an image, comprising:
receiving one or more incoming light rays at a first surface of a transparent front sheet (102), the front sheet (102) having a refractive index;
forming a first optical state by directing a plurality of first electrophoretically mobile particles to a region adjacent a first electrode and directing a plurality of second electrophoretically mobile particles to a region adjacent a second and a third electrodes;
forming a second optical state by directing the plurality of second electrophoretically mobile particles to the region adjacent the first electrode and directing the plurality of first electrophoretically mobile particles to the region adjacent the second and the third electrodes; and
forming a third optical state by total internal reflection by directing the plurality of first electrophoretically mobile particles to a region adjacent the second electrode and directing the second plurality of electrophoretically mobile particles to a region adjacent the third electrode;
wherein the plurality of first electrophoretically mobile particles comprise a first charge polarity and a first optical characteristic;
wherein the plurality of second electrophoretically mobile particles comprise a second charge polarity and a second optical characteristic; and
wherein the first charge and the second charge are opposite in polarity.

2. The method of claim 1, wherein the first optical state further comprises substantially or selectively absorbing the one or more incoming light rays by the plurality of first electrophoretically mobile particles thereby exhibiting the optical characteristic of the first electrophoretically mobile particles and wherein the second optical state further comprises substantially or selectively absorbing the one or more incoming light rays by the plurality of second electrophoretically mobile particles thereby exhibiting the optical characteristic of the second electrophoretically mobile particles and wherein the third optical state further comprises totally internally reflecting the one or more incoming light rays to create a light or bright optical state.

3. The method of claim 1, further comprising receiving the one or more light rays at the first surface of the transparent front sheet (102) and exiting the one or more light rays at a second surface of the transparent front sheet (102), the second surface having a plurality of hemispherical or convex protrusions (204).

4. The method of claim 1, further comprising biasing the first electrode at a first voltage and biasing each of the second and third electrodes at a second voltage.

5. The method of claim 1, further comprising biasing the first electrode at a first voltage, biasing the second electrode at a second voltage and biasing the third electrode at a third voltage and wherein the second and the third biases are substantially opposite in polarity.

6. A multi-electrode display device, comprising:
a transparent front sheet (102) to receive one or more incoming light rays at a first surface thereof, the front sheet having a refractive index;
a first electrode positioned proximal to the front sheet (102);
a rear support (108) facing the first electrode and forming a cavity therebetween;
a second electrode positioned adjacent to the cavity;
a third electrode positioned adjacent to second electrode and the cavity; and
a controller (440) to communicate with each of the first, second and the third electrodes, the controller (440) configured to independently activate one or more of the first, second or third electrodes to cause total internal reflection of the one or more incoming light rays through the front sheet (102) to thereby substantially exclude the incoming light rays from the cavity or to cause frustration of total internal reflection;
wherein a plurality of first electrophoretically mobile particles comprise a first charge polarity and a first optical characteristic;
wherein a plurality of second electrophoretically mobile particles comprise a second charge polarity and a second optical characteristic; the plurality of first and second electrophoretically mobile particles being located in the cavity; and
wherein the first charge and the second charge are opposite in polarity.

7. The display of claim 6, wherein the second and third electrodes are positioned adjacent each other as an array of interdigitated electrodes.

8. The display of claim 6, wherein the front sheet (102) further comprises a plurality of protrusions on a second surface thereof and wherein at least one of the plurality of protrusions defines a hemispherical or a convex protrusion (204).

9. The display of claim 6, wherein the controller (440) is further configured to bias each of the first, second and third electrodes independently to modulate total internal reflection (TIR) by moving the first electrophoretically mobile particles adjacent to the first electrode and moving the second electrophoretically mobile particles adjacent to the second and third electrodes.

10. The display of claim 6, wherein the controller (440) is further configured to bias each of the first, second and third electrodes independently to provide total internal reflection (TIR) by moving the first electrophoretically mobile particles adjacent the second electrode and moving the second electrophoretically mobile particles adjacent the third electrode.

11. The display of claim 6, further comprising a first sidewall extending from the first electrode to the second electrode and a second sidewall extending from the first electrode to the third electrode to form a compartment between the first and the second sidewalls.

12. The display of claim 6, further comprising a color filter array.

13. The display of claim 6, further comprising further comprising a front light system including include a light source, light guide and an array of light extractor elements on the top surface of the top sheet in each display.

14. The display of claim 6, further comprising a light diffusive layer.

## Patentansprüche

1. Ein Verfahren zum Anzeigen eines Bildes, umfassend:
Empfangen eines oder mehrerer einfallender Lichtstrahlen an einer ersten Oberfläche einer transparenten Frontplatte (102), wobei die Frontplatte (102) einen Brechungsindex aufweist;
Bilden eines ersten optischen Zustands durch Leiten einer Mehrzahl von ersten elektrophoretisch beweglichen Teilchen in einen Bereich, der an eine erste Elektrode angrenzt, und Leiten einer Mehrzahl von zweiten elektrophoretisch beweglichen Teilchen in einen Bereich, der an eine zweite und eine dritte Elektrode angrenzt;
Bilden eines zweiten optischen Zustands durch Leiten der Mehrzahl von zweiten elektrophoretisch beweglichen Teilchen in den Bereich, der an die erste Elektrode angrenzt, und Leiten der Mehrzahl von ersten elektrophoretisch beweglichen Teilchen in den Bereich, der an die zweite und die dritte Elektrode angrenzt; und
Bilden eines dritten optischen Zustands durch innere Totalreflexion durch Leiten der Mehrzahl von ersten elektrophoretisch beweglichen Teilchen in einen Bereich, der an die zweite Elektrode angrenzt, und Leiten der zweiten Mehrzahl von elektrophoretisch beweglichen Teilchen in einen Bereich, der an die die dritte Elektrode angrenzt;
wobei die Mehrzahl von ersten elektrophoretisch beweglichen Teilchen eine erste Ladungspolarität und eine erste optische Eigenschaft aufweist;
wobei die Mehrzahl von zweiten elektrophoretisch beweglichen Teilchen eine zweite Ladungspolarität und eine zweite optische Eigenschaft aufweist; und
wobei die erste Ladung und die zweite Ladung eine entgegengesetzt Polarität aufweisen.

2. Das Verfahren nach Anspruch 1,
wobei der erste optische Zustand ferner das Absorbieren des einen oder der mehreren einfallenden Lichtstrahlen durch die Mehrzahl von ersten elektrophoretisch beweglichen Teilchen zum wesentlichen Teil oder selektiv umfasst, wodurch die optische Eigenschaft der ersten elektrophoretisch beweglichen Teilchen gezeigt wird, und
wobei der zweite optische Zustand ferner das Absorbieren des einen oder der mehreren einfallenden Lichtstrahlen durch die Mehrzahl von zweiten elektrophoretisch beweglichen Teilchen zum wesentlichen Teil oder selektiv umfasst, wodurch die optische Eigenschaft der zweiten elektrophoretisch beweglichen Teilchen gezeigt wird, und
wobei der dritte optische Zustand ferner das totale interne Reflektieren des einen oder der mehreren einfallenden Lichtstrahlen umfasst, um einen hellen oder glänzenden optischen Zustand zu erzeugen.

3. Das Verfahren nach Anspruch 1, das ferner das Empfangen des einen oder der mehreren Lichtstrahlen an der ersten Oberfläche der transparenten Frontplatte (102) und das Austreten des einen oder der mehreren Lichtstrahlen an einer zweiten Oberfläche der transparenten Frontplatte (102) umfasst,
wobei die zweite Oberfläche eine Vielzahl von halbkugelförmigen oder konvexen Vorsprüngen (204) aufweist.

4. Das Verfahren nach Anspruch 1, das ferner das Vorspannen der ersten Elektrode mit einer ersten Spannung und das Vorspannen der zweiten und der dritten Elektrode mit einer zweiten Spannung umfasst.

5. Das Verfahren nach Anspruch 1, das ferner das Vorspannen der ersten Elektrode mit einer ersten Spannung, das Vorspannen der zweiten Elektrode mit einer zweiten Spannung und das Vorspannen der dritten Elektrode mit einer dritten Spannung umfasst, und
wobei die zweite und die dritte Vorspannung im Wesentlichen entgegengesetzte Polarität haben.

6. Eine Multi-Elektroden-Anzeigevorrichtung, umfassend:
eine transparente Frontplatte (102) zum Empfangen eines oder mehrerer einfallender Lichtstrahlen an einer ersten Oberfläche, wobei die Frontplatte (102) einen Brechungsindex aufweist;
eine erste Elektrode, die proximal zu der Frontplatte (102) angeordnet ist;
einen hinteren Träger (108), der der ersten Elektrode gegenüberliegt und dazwischen einen Hohlraum bildet,
eine zweite Elektrode, die angrenzend an den Hohlraum angeordnet ist;
eine dritte Elektrode, die angrenzend an die zweite Elektrode und den Hohlraum angeordnet ist; und
eine Steuerung (440) zum Kommunizieren mit der ersten, zweiten und dritten Elektrode,
wobei die Steuerung (440) konfiguriert ist zum Aktivieren einer oder mehrerer von der ersten, zweiten oder dritten Elektrode unabhängig voneinander zum Bewirken einer inneren Totalreflexion des einen oder mehrerer durch die Frontplatte (102) einfallenden Lichtstrahlen, um dadurch die einfallenden Lichtstrahlen im Wesentlichen aus dem Hohlraum auszuschließen, oder zum Bewirken einer Verhinderung der inneren Totalreflexion;
wobei eine Mehrzahl von ersten elektrophoretisch beweglichen Teilchen eine erste Ladungspolarität und eine erste optische Eigenschaft aufweist,
wobei eine Mehrzahl von zweiten elektrophoretisch beweglichen Teilchen eine zweite Ladungspolarität und eine zweite optische Eigenschaft aufweist,
wobei die Mehrzahl von ersten und zweiten elektrophoretisch beweglichen Teilchen in dem Hohlraum angeordnet sind; und
wobei die erste Ladung und die zweite Ladung eine entgegengesetzte Polarität aufweisen.

7. Die Anzeige nach Anspruch 6, bei der die zweite und dritte Elektrode nebeneinander als ein Array von fingerförmig ineinandergreifenden Elektroden angeordnet sind.

8. Die Anzeige nach Anspruch 6, bei der die Frontplatte (102) ferner eine Mehrzahl von Vorsprüngen auf einer zweiten Oberfläche aufweist, und
wobei mindestens einer der Mehrzahl von Vorsprüngen einen halbkugelförmigen oder konvexen Vorsprung bildet (204).

9. Die Anzeige nach Anspruch 6, bei der die Steuerung (440) ferner konfiguriert ist zum Vorspannen der der ersten, zweiten und dritten Elektrode unabhängig voneinander zum Modulieren einer totalen internen Reflexion (TIR) durch Bewegen der ersten elektrophoretisch beweglichen Teilchen in die Nähe der ersten Elektrode und Bewegen der zweiten elektrophoretisch beweglichen Teilchen in die Nähe der zweiten und dritten Elektrode.

10. Die Anzeige nach Anspruch 6, bei der die Steuerung (440) ferner konfiguriert ist zum Vorspannen der der ersten, zweiten und dritten Elektrode unabhängig voneinander zum Bereitstellen einer totalen internen Reflexion (TIR) durch Bewegen der ersten elektrophoretisch beweglichen Teilchen in die Nähe der zweiten Elektrode und Bewegen der zweiten elektrophoretisch beweglichen Teilchen in die Nähe der dritten Elektrode.

11. Die Anzeige nach Anspruch 6, ferner umfassend
eine erste Seitenwand, die sich von der ersten Elektrode zu der zweiten Elektrode erstreckt, und
eine zweite Seitenwand, die sich von der ersten Elektrode zu der dritten Elektrode erstreckt, zum Bilden einer Kammer zwischen der ersten und der zweiten Seitenwand.

12. Die Anzeige nach Anspruch 6, die ferner ein Farbfilterfeld umfasst.

13. Die Anzeige nach Anspruch 6, die ferner ein Frontlichtsystem umfasst, das eine Lichtquelle, einen Lichtleiter und ein Feld von Lichtextraktionslementen auf der oberen Oberfläche des oberen Blattes in jeder Anzeige enthält.

14. Die Anzeige nach Anspruch 6, die ferner eine lichtstreuende Schicht umfasst.

## Revendications

1. Procédé d'affichage d'une image, comprenant :
la réception d'un ou de plusieurs rayons de lumière incidente au niveau d'une première surface d'une feuille avant transparente (102), la feuille avant (102) présentant un indice de réfraction ;
la création d'un premier état optique en dirigeant une pluralité de premières particules mobiles par électrophorèse vers une région adjacente à une première électrode et en dirigeant une pluralité de deuxièmes particules mobiles par électrophorèse vers une région adjacente à une deuxième électrode et à une troisième électrode ;
la création d'un deuxième état optique en dirigeant la pluralité de deuxièmes particules mobiles par électrophorèse vers la région adjacente à la première électrode et en dirigeant la pluralité de premières particules mobiles par électrophorèse vers la région adjacente à la deuxième électrode et à la troisième électrode ; et
la création d'un troisième état optique par le biais d'une réflexion interne totale en dirigeant la pluralité de premières particules mobiles par électrophorèse vers une région adjacente à la deuxième électrode et en dirigeant la pluralité de deuxièmes particules mobiles par électrophorèse vers une région adjacente à la troisième électrode ;
selon lequel la pluralité de premières particules mobiles par électrophorèse comprend une première polarité de charge et une première caractéristique optique ;
selon lequel la pluralité de deuxièmes particules mobiles par électrophorèse comprend une deuxième polarité de charge et une deuxième caractéristique optique ; et
selon lequel la première charge et la deuxième charge présentent des polarités opposées.

2. Procédé selon la revendication 1, selon lequel le premier état optique comprend en outre l'absorption substantielle ou sélective du ou des plusieurs rayons de lumière incidente par la pluralité de premières particules mobiles par électrophorèse exhibant ainsi la caractéristique optique des premières particules mobiles par électrophorèse et selon lequel le deuxième état optique comprend en outre l'absorption substantielle ou sélective du ou des plusieurs rayons de lumière incidente par la pluralité de deuxièmes particules mobiles par électrophorèse exhibant ainsi la caractéristique optique des deuxièmes particules mobiles par électrophorèse et selon lequel le troisième état optique comprend en outre la réflexion interne totale du ou des plusieurs rayons de lumière incidente afin de créer un état optique clair ou lumineux.

3. Procédé selon la revendication 1, comprenant en outre la réception du ou des plusieurs rayons de lumière incidente au niveau de la première surface de la feuille avant transparente (102) et la sortie du ou des plusieurs rayons de lumière au niveau d'une deuxième surface de la feuille avant transparente (102), la deuxième surface présentant une pluralité de protrusions hémisphériques ou convexes (204).

4. Procédé selon la revendication 1, comprenant en outre le réglage de la première électrode à une première tension et le réglage de chacune de la deuxième électrode et la troisième électrode à une deuxième tension.

5. Procédé selon la revendication 1, comprenant en outre le réglage de la première électrode à une première tension, le réglage de la deuxième électrode à une deuxième tension et le réglage de la troisième électrode à une troisième tension, et selon lequel les deuxième et troisième réglages sont de polarité sensiblement opposée.

6. Dispositif d'affichage multi-électrode, comprenant :
une feuille avant transparente (102) destinée à recevoir un ou plusieurs rayons de lumière incidente au niveau d'une première surface de la feuille avant, celle-ci présentant un indice de réfraction ;
une première électrode positionnée à proximité de la feuille avant (102) ;
un support arrière (108) faisant face à la première électrode et créant une cavité entre les deux ;
une deuxième électrode positionnée de manière adjacente à la cavité ;
une troisième électrode positionnée de manière adjacente à la deuxième électrode et à la cavité ; et
un contrôleur (440) destiné à communiquer avec chacune des première, deuxième et troisième électrodes, le contrôleur (440) étant configuré pour activer de manière indépendante une ou plusieurs des première, deuxième, ou troisième électrodes afin de provoquer une réflexion interne totale du ou des plusieurs rayons de lumière incidente à travers la feuille avant (102) afin d'exclure sensiblement les rayons de lumière incidente de la cavité ou de frustrer la réflexion interne totale ;
selon lequel une pluralité de premières particules mobiles par électrophorèse comprend une première polarité de charge et une première caractéristique optique ;
selon lequel une pluralité de deuxièmes particules mobiles par électrophorèse comprend une deuxième polarité de charge et une deuxième caractéristique optique ;
la pluralité de premières et deuxièmes particules mobiles par électrophorèse étant localisées dans la cavité ; et
selon lequel la première charge et la deuxième charge présentent des polarités opposées.

7. Affichage selon la revendication 6, selon lequel la deuxième électrode et la troisième électrode sont positionnées de manière adjacente l'une à l'autre sous forme de réseau d'électrodes entrelacées.

8. Affichage selon la revendication 6, selon lequel la feuille avant (102) comprend en outre une pluralité de protrusions sur une deuxième surface de celle-ci et selon lequel au moins une de la pluralité de protrusions définit une protrusion hémisphérique ou convexe (204).

9. Affichage selon la revendication 6, selon lequel le contrôleur (440) est en outre configuré pour régler chacune des première, deuxième, et troisième électrodes de manière à moduler indépendamment la réflexion interne totale (RIT) en déplaçant les premières particules mobiles par électrophorèse de manière à être adjacentes à la première électrode et en déplaçant les deuxièmes particules mobiles par électrophorèse de manière à être adjacentes aux deuxième et troisième électrodes.

10. Affichage selon la revendication 6, selon lequel le contrôleur (440) est en outre configuré pour régler chacune des première, deuxième, et troisième électrodes de manière indépendante pour fournir de la réflexion interne totale (RIT) en déplaçant les premières particules mobiles par électrophorèse de manière à être adjacentes à la deuxième électrode et en déplaçant les deuxièmes particules mobiles par électrophorèse de manière à être adjacentes à la troisième électrode.

11. Affichage selon la revendication 6, comprenant en outre une première paroi latérale s'étendant depuis la première électrode à la deuxième électrode et une deuxième paroi latérale s'étendant depuis la première électrode à la troisième électrode afin de créer un compartiment entre la première paroi latérale et la deuxième paroi latérale.

12. Affichage selon la revendication 6, comprenant en outre un réseau de filtrage de couleurs.

13. Affichage selon la revendication 6, comprenant en outre un premier système de lumière avant comportant une source de lumière, un guide de lumière et un réseau d'éléments d'extraction de lumière sur la surface de dessus de la feuille de dessus de chaque affichage.

14. Affichage selon la revendication 6, comprenant en outre une couche de diffusion de la lumière.
